# EUROPEAN PATENT SPECIFICATION

(11) **EP 4 334 790 B1**
(45) Date of publication and mention of the grant of the patent: **02.04.2025**
(21) Application number: 22730096.9
(22) Date of filing: 17.05.2022
(51) Int. Cl.: G05B 19/418, G05B 23/02, G05B 13/04

(54) **A METHOD OF VIRTUALLY INSPECTING A QUALITY OF A PRODUCT**
VERFAHREN ZUR VIRTUELLEN INSPEKTION DER QUALITÄT EINES PRODUKTS
PROCÉDÉ D'INSPECTION VIRTUELLE D'UNE QUALITÉ D'UN PRODUIT

(30) Priority: 10.06.2021 EP 21178837
(43) Date of publication of application: 13.03.2024
(73) Proprietor: Siemens Aktiengesellschaft, 80333 München (DE)
(72) Inventor: GROSS, Ralf, 90471 Nürnberg (DE); KUMAR, Avinash, 81379 München (DE); LI, Xiang, Beijing, Hebei 102208 (CN); LOSKYLL, Matthias, 92318 Neumarkt (DE); WANG, Xiao Feng, Beijing, Hebei 100107 (CN)
(74) Representative: Siemens Patent Attorneys
(86) International application number: PCT/EP2022/063230
(87) International publication number: WO 2022/258321

(56) References cited:
- EP-A1- 3 693 823
- US-A1- 2017 193 400
- US-A1- 2019 303 717
- US-A1- 2019 370 955

## Description

The present disclosure relates to data classification in industrial automation, and more particularly to utilization of data classification in quality inspection systems in industrial automation. In production plants and other such manufacturing facilities, classifier models based on artificial intelligence technology are utilized to predict information that increases the efficiency of the production process or improve product quality. These classifiers are usually trained once and then deployed to be utilized in the production plant. For example, in quality inspection systems, such models are used for evaluating quality of work in progress pieces.

The present disclosure relates to data classification models based on artificial intelligence in industrial automation. Data classification models are used to classify objects into various categories based on different features reflected in information associated with objects. One such application in relation to data classification, relates to quality inspection systems in production plants.

In production plants, quality inspection of the work in progress items is performed after manufacturing operations. Currently, this can be performed using virtual inspections (i.e., using a data classification model) and/or physical inspections (i.e., using an inspection or testing process such as X-ray inspection, ultrasound testing, manual inspection by an operator, etc.). Usually, physical inspections require specialized, mostly expensive machines and additional material handling. Moreover, the physical inspections are non-value-adding, add complexity and prolong the manufacturing process (in comparison to virtual inspections). Therefore, usually, virtual inspections are preferred on all work in progress pieces and physical inspections are performed only when virtual inspections are not possible, or on random work in progress pieces or on final pieces after all manufacturing processes have been completed.

Conventionally, prior to deployment, such data classification models are trained using historic data which includes data associated with known fault categories. However, in case where new fault categories are identified during production, the deployed classifier needs to be extended for consideration of these new categories. Especially with increasing flexibility in production plants, this can become a major challenge. Accordingly, there is a need for a method and device which addresses the abovementioned issue.

EP 3693823 describes a method for inspecting displays that are produced for mobile devices. The method includes using a neural network model which analyses trace data from the manufacturing process and retraining of the model using a topological analysis dataset.

Active learning for defect classifiers while using selected data points and corresponding labels is known e. g. from US 2019370955.

In US 2017193400 a method for accelerated training of a machine learning based model for semiconductor applications by using non-nominal instances of specimens (i.e., defective specimens) is described.

The current disclosure describes a method accordingly to claim 1, a virtual inspection device according to claim 5 and a non-transitory storage medium according to claim 6 which address the above-mentioned aspects.

Accordingly, the current disclosure describes a method of virtually inspecting a quality of a product in a production environment using one or more classifier models. The method comprises receiving production information associated with the product, wherein the production information is indicative of an operation performed on the product, in relation to a first process of the production environment, determining a label for the product using a first classifier model based on the received information associated with the product, comparing the determined label against inspection data, wherein the inspection data is associated with an inspection of the product, and storing the production information and the inspection data associated with the product in an extension buffer, based on the comparison of the determined label and the inspection data, for retraining the first classifier model. Accordingly, the current disclosure describes a method of storing new fault category information in an extension buffer which is then dynamically used to retrain the model. Accordingly, this allows for retraining of classifier models without human intervention. Additionally, this allows for effective and efficient inspection of work in progress items or products using the retrained classifier models.

In an example, the first classifier model is configured to be retrained using one or more samples present in the extension buffer for adding one or more new labels, upon detecting a predefined number of samples in the extension buffer, each sample from the one or more samples comprising production information and corresponding inspection data associated with a corresponding product.

In an example, the method further comprises determining a number of samples in the extension buffer and retraining the first classifier model using the one or more samples in the extension buffer when the number of samples is greater than a predefined threshold value, wherein each sample from the one or more samples comprising production information and corresponding inspection data associated with a corresponding product. Accordingly, the current disclosure allows for automatic retraining based on a predetermined number of samples in the extension buffer. Accordingly, this allows for quick retraining of models to identify and detect new fault categories.

In an example, the production environment includes one or more processes wherein each process from the one or more processes includes one or more operations to be performed. In another example, wherein the inspection data includes a new label indicative of a condition of product determined during the inspection of the product.

In another aspect, the current disclosure describes a virtual inspection device for virtually inspecting a quality of a product in a production environment using one or more classifier models. The virtual inspection device comprises a network interface for receiving production information associated with the product, wherein the production information is indicative of an operation performed on the product, in relation to a first process of the production environment and one or more processors connected to a memory module. The one or more processors are configured to determine a label for the product using a first classifier model based on the received information associated with the product, compare the determined label against inspection data, wherein the inspection data is associated with an inspection of the product, and store the production information and the inspection data associated with the product in an extension buffer of the memory module, based on the comparison of the determined label and the inspection data, for retraining the first classifier model.

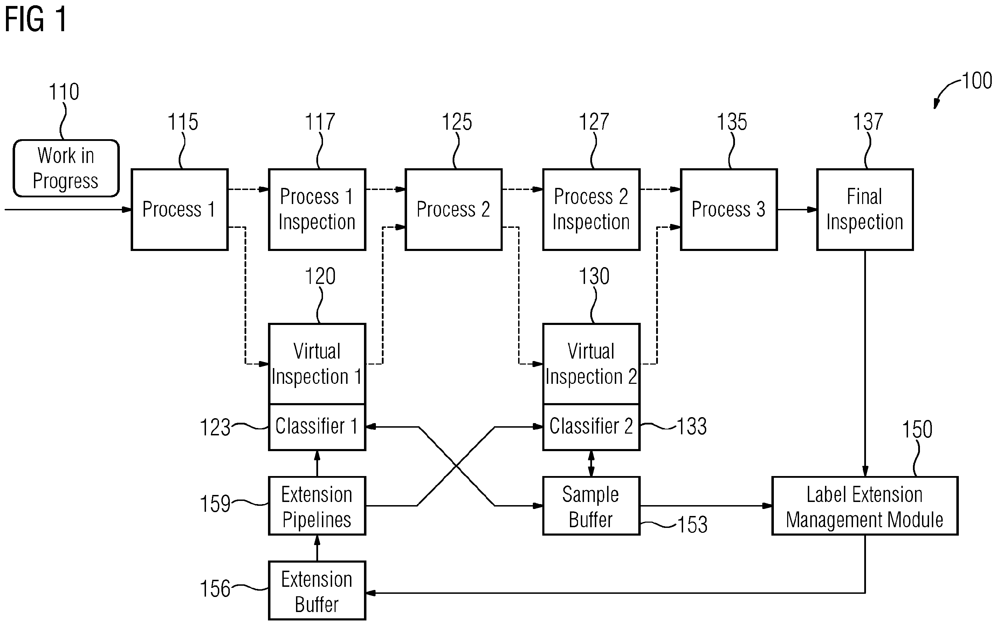

In yet another aspect, the current disclosure describes a non-transitory storage medium for virtually inspecting a quality of a product in a production environment using one or more classifier models. The non transitory storage medium comprises a plurality of instructions, which when executed on one or more processors, cause the one or more processors to determine a label for the product using a first classifier model based on the received information associated with the product, compare the determined label against inspection data, wherein the inspection data is associated with an inspection of the product, and store the production information and the inspection data associated with the product in an extension buffer, based on the comparison of the determined label and the inspection data, for retraining the first classifier model. The advantages of the method apply to the device and the non-transitory storage medium described herein. These aspects are further described in relation figures 1-3.

The following detailed description references the drawings, wherein:
Figure 1 illustrates an example production environment including a plurality of manufacturing processes;
Figure 2 illustrates an example method of virtually inspecting a quality of a product in a production environment using one or more classifier models; and
Figure 3 illustrates an example virtual inspection device configured to virtually inspecting a quality of a product in a production environment using one or more classifier models.

Figure 1 illustrates an example production environment 100 including a plurality of manufacturing or industrial processes (shown in the figure as process 115, process 125, process 135). Each process from the one or more processes (115, 125, 135) includes one or more operations to be performed on the work in progress item 110. Production environment 100 herein refers to any environment where the one or more industrial processes such as manufacturing, refining, smelting, assembly of equipment may take place, and accordingly includes process plants, automobile factories, integrated circuit fabrication industries, warehouses, etc. The production environment 100 includes a production control system (also referred to as industrial automation system) responsible for monitoring and controlling the industrial processes. The production control system comprises a plurality of industrial devices and subsystems such as control devices, field devices, operator stations, process historians, etc. Control devices includes process controllers, programmable logic controllers, supervisory controllers, automated guided vehicles, robots, operator devices, etc. Control devices are connected to a plurality of field devices (not shown in figure) such as actuators and sensor devices for monitoring and controlling industrial processes in the industrial facility. These field devices can include flowmeters, value actuators, temperature sensors, pressure sensors, etc. The control devices may be connected to each other via a control network (realized via wired and/or wireless networks). Operator stations display the status of the industrial plant to an operator and for allowing the operator to define setpoints for the control of the industrial processes in the facility.

Additionally, the production control system includes one or more quality inspection stations (including quality inspection devices and equipment) for physically inspecting quality of the work in progress product or item after a corresponding process. Examples of inspection devices in such inspection stations include X-Ray devices, ultrasonic testing devices, etc. For example, as shown in the figure, inspection station 117 is for checking the quality of the work in progress product or item after the operations of the process 115 have been carried out on the work in progress product. Similarly, inspection station 127 is for checking the quality of the work in progress product or item after the operations of the process 125 have been carried out on the work in progress product. Similarly, inspection station 137 is for checking the quality of the work in progress product or item after the operations of the process 135 have been carried out on the work in progress product. Additionally, since process 135 is the last process to be carried out on the work in progress product, the inspection station 137 serves as the final inspection station and all the necessary quality checks for approval of the product is carried out here. In addition to the quality inspections stations, the production control system includes one or more virtual inspection devices (shown in the figure as virtual inspection devices 120 and 130). The one or more virtual inspection devices are capable of determining or estimate a quality of the work in progress item or product after a corresponding process based on production information associated with the work in progress product. The virtual inspection devices include one or more AI based classifier models (shown in the figure as classifier 123 and classifier 153) which are trained to determine a label or category associated with the work in progress product based on the production information. Based on the result from the physical inspection from the quality inspection station or the virtual inspection device, the work in progress product is moved or transferred from the preceding process to the next process. The result of the virtual inspection device along with the production information of the associated work in progress product is stored in a sample buffer 153.

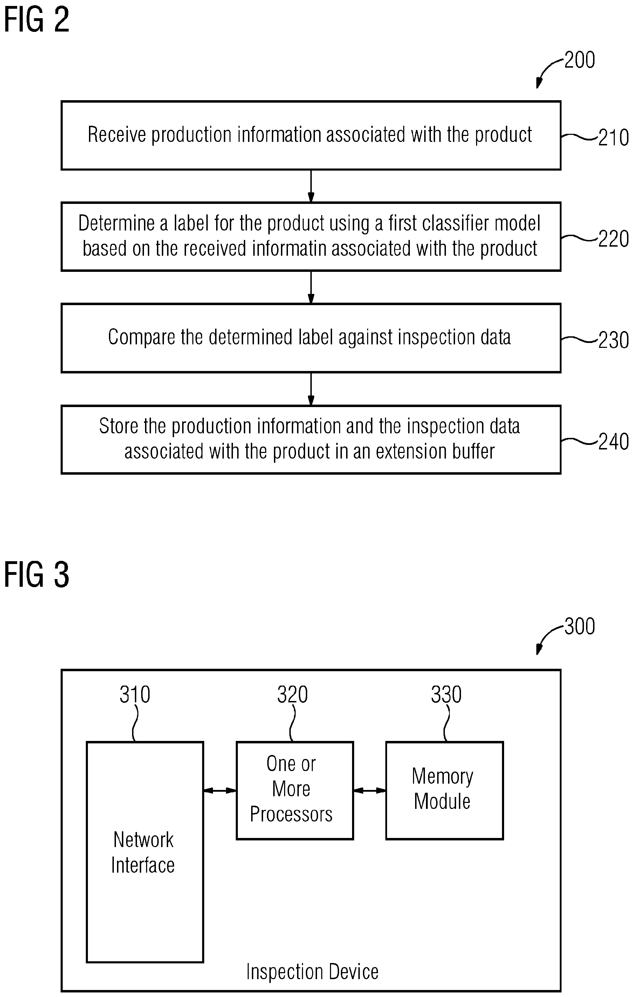

Additionally, the production control system includes a label extension management module 150 configured to compare the result from the final inspection, i.e., from the inspection station 137 against the results from the virtual inspection devices 120 and 130 and, if required, retrain the classifier models 123 and 133 based on the comparison. This is further explained in the description of the figure 2.

Figure 2 illustrates a method 200 of virtually inspecting a quality of a product 110 in the production environment 100 using one or more classifier models (123, 133). For ease in explanation, the method is described in relation to a work in progress product (shown in figure 1 as 110) after the operations of the first process 115 has been performed on work in progress product 110. Accordingly, the work in progress product 110 is up for virtual inspection by the virtual inspection device 120. Accordingly, the method 200 is performed by the virtual inspection device 120 and the label extension management module 150.

At step 210, the virtual inspection device 120 receives production information associated with the product 110. The production information is indicative of an operation performed on the product 110, in relation to the first process 115 of the production environment 100. Examples of production information includes process data such as time series data in relation to one or more process parameters associated with the first process, visual data of the work in the progress product 110 after the completion of the operations of the first process, etc. In an example, the process data is transmitted to the virtual inspection device 120 by a control device associated with the first process 115. In another example, the visual data of the work in the progress product 110 is transmitted to the virtual inspection device 120 from one or more image capturing devices capable of capturing a plurality of images of the product 110 in a plurality of spectrums.

At step 220, the virtual inspection device 120 determines a label (also referred to as prediction) for the product 110 using a first classifier model 123 based on the received production information associated with the product 110. As mentioned previously, the virtual inspection device 120 includes a first classifier model 123 which is trained to determine a label associated with a product based on the received production information. The label is indicative of a condition of the product/work in progress item. For example, the label indicates if the product meets the approved quality or a fault associated with the product.

Then, at step 230, the label management extension module 150 compares the determined label against inspection data. The inspection data is associated with an inspection of the product 110 performed subsequent to a process from the one or more processes. For example, the inspection is the final inspection performed on the corresponding product 110 at the inspection station 137. The inspection data from the inspection includes information regarding the condition of the work in progress product 110. For example, the inspection data indicates that the work in progress product 110 meets quality standards specified in the inspection. In another example, the inspection data includes fault data indicative of one or more reasons (i.e., faults or deficiencies) due to which the work in progress product 110 failed inspection. In an example, the inspection data includes a label indicative of a condition of product 110 determined during the inspection 117, 137 of the product 110. Accordingly, the label management extension module 150 compares the label from the classifier associated with the work in progress against the inspection data associated with the work in progress product 110, to check if the label matches the inspection data or not.

Then, at step 240, the label extension management module 150 stores the production information and the inspection data associated with the product 110 in an extension buffer 156, based on the comparison of the determined label and the inspection data as mentioned above. Accordingly, based on the comparison mentioned above to check if the label matches the inspection data, the extension management module 150 determines if the production information and the inspection data associated with the product 110 is to be stored in the extension buffer 156. In cases where the determined label matches the inspection data (i.e. the condition of work in progress as determined by the classifier model matches the condition as determined during the inspection), the label extension management module 150 determines that the classifier model 120 is working properly and therefore the production information and inspection data is discarded and not stored in the extension buffer 156. In cases where the determined label does not match the inspection data (i.e. the condition of work in progress as determined by the classifier model does not match the condition as determined during the inspection), the label extension management module 150 determines that the classifier model 120 is not working properly and therefore the production information and inspection data is stored in the extension buffer 156, for retraining the first classifier model. In an example, the extension management module 150 additionally checks if the label in the inspection data is present in the set of labels associated with the first classifier model 123. If the label in the inspection data is present within the set of labels, the production information and the inspection data is discarded. It may be noted by a person skilled in the art that while the inspection data is discarded in the context of the current method, the discarded inspection data may still be used for training untrained models. If the label in the inspection data is not present within the set of labels associated with the first classifier model, the production information and the inspection data is stored in the extension buffer 156.

Accordingly, a plurality of such pairs of production information and inspection data related to a plurality of work in progress products is stored in the extension buffer 156. The pair of production information and inspection data of an associated work in progress product is known as a sample. Accordingly, the extension buffer 156 include a plurality of samples. The label extension management module 150 utilizes the one or more samples in the extension buffer 156 to retrain the first classifier model 123 for adding one or more new labels, upon detecting a predefined number of samples in the extension buffer 156.

In an example, the label extension management module 150 is configured to receive the inspection data from the inspection station 137 after the inspection of the work in progress product 110 is completed. In an example, the label extension management module 150 is configured to retrieve the production information associated with the product 110 along with the label determined by the first classifier model 123 from the sample buffer upon receiving the inspection data from the inspection station 137.

In an example, the label extension management module 150 determines a number of samples in the extension buffer 156. And based on the number of samples, the label extension management module 150 retrains the first classifier model 123 using the one or more samples in the extension buffer 156. In an example, the retraining is performed only when the number of samples is greater than a predefined threshold value. In an example, each sample in the extension buffer is associated with a particular category, category indicative of a particular condition or fault. Accordingly, the label extension management module 150 is configured to retrain the classifier model based on samples associated with a particular category based on the number of samples associated with that particular category. In an example, the classifier model 123 is trained utilizing a few-shot learning (FSL) methodology that allows for dynamic extension of the classifier from the set of initial labels. Accordingly, in an example, the extension buffer 156 is connected to an extension pipeline 159 which is a FSL based pipeline for classifier extension and accordingly reduces computational complexity compared to regular training.

It is to be noted that while the above method is explained in relation to virtual inspection device 120 and classifier model 123, the method 200 is applicable to virtual inspection device 130 and classifier model 133 as well. Additionally, while the above method is explained in relation to first process 115 and subsequent inspection 117 or 137, the same is applicable to other processes and inspections in the production environment 100. It is also to be noted that while the sample buffer 153 and extension buffer 159 are shown as two different modules, both the buffers can be implemented in the same buffer system. In this case a sample is not 'moved' between the buffers by the label extension management module 150 but rather annotated with the respective unknown label and, possibly, marked as relevant for extension (i.e., classifier retraining) by using flags.

In an example, after retraining the classifier model, the retrained model instance is tested prior to replacing the previous version of the classifier model in operation. A validation test is conducted first and the retrained model is deployed only performed in case that the overall accuracy of the retrained model exceeds a certain predefined threshold. It is to be noted that while the above method 200 is explained in relation to virtual inspection device 120 and label extension management module 150, the above method may be realized in a single device or a plurality of devices. For example, the method 200 may be in a virtual inspection device 300 as shown in figure 3. Accordingly, the present disclosure can take a form of a computer program product comprising program modules accessible from computer-usable or computer-readable medium storing program code for use by or in connection with one or more computers, processing units, or instruction execution system.

Accordingly, in another aspect, the current disclosure describes a virtual inspection device 300 as shown in figure 3, for virtually inspecting a quality of the product 110 in the production environment 100 using one or more classifier models (123, 133). The virtual inspection device 300 comprises a network interface 310 for receiving production information associated with the product 110. As mentioned previously, the production information is indicative of an operation performed on the product 110, in relation to a first process 115 of the production environment 100. Additionally, the virtual inspection device 300 includes one or more processors 320 connected to a memory module 330 (also referred to as non-transitory memory medium 330). The memory module 330 comprises a plurality of instructions, which when executed on the one or more processors 320, cause the one or more processors 320 to determine a label for the product using a first classifier model 123 based on the received information associated with the product 110, compare the determined label against inspection data, wherein the inspection data is associated with an inspection (117, 137) of the product 110, and store the production information and the inspection data associated with the product 110 in an extension buffer 156 of the memory module, based on the comparison of the determined label and the inspection data, for retraining the first classifier model.

For the purpose of this description, a computer-usable or computer-readable non-transitory storage medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processing units and program code for implementing each aspect of the technology can be centralized or distributed (or a combination thereof) as known to those skilled in the art.

## Claims

1. A method (200) of virtually inspecting a quality of a product (110) in a production environment (100) using one or more classifier models (123, 133), the method (200) comprising:
a. receiving (210) production information associated with the product (110), wherein the information is indicative of an operation performed on the product (110), in relation to a first process (115) of the production environment (100);
b. determining (220) a label for the product using a first classifier model (123) based on the received information associated with the product (110);
c. comparing (230) the determined label against inspection data, wherein the inspection data is associated with an inspection (117, 137) of the product (110); and
d. storing (240) the production information and the inspection data associated with the product (110) in an extension buffer (156), based on the comparison of the determined label and the inspection data, for retraining the first classifier model,
**characterized in**,
e. retraining the first classifier model (123) using one or samples present in the extension buffer (156) for adding one or more new labels, upon detecting a predefined number of samples present in the extension buffer (156),
wherein each sample from the one or more samples comprising production information and corresponding inspection data associated with a corresponding product, the corresponding inspection data including a new label indicative of a condition of the corresponding product (110) determined during the inspection (117, 137) of the product (110).

2. The method as claimed in claim 1, wherein the method further comprises determining a number of samples in the extension buffer (156).

3. The method as claimed in claim 1, wherein the production environment includes one or more processes (115, 125, 135), wherein each process from the one or more processes (115, 125, 135) includes one or more operations to be performed.

4. The method as claimed in claim 1, wherein production information includes at least one of visual data associated with the product (110) subsequent to the performance of the operation and process data of the first process (115) associated with the product (110).

5. A virtual inspection device for virtually inspecting a quality of a product (110) in a production environment (100) using one or more classifier models (123, 133), the virtual inspection device comprises:
a. a network interface for receiving production information associated with the product (110), wherein the production information is indicative of an operation performed on the product (110), in relation to a first process (115) of the production environment (100); and
b. one or more processors connected to a memory module, the one or more processors configured to:
i. determine a label for the product using a first classifier model (123) based on the received information associated with the product (110);
ii. compare the determined label against inspection data, wherein the inspection data is associated with an inspection (117, 137) of the product (110); and
iii. store the production information and the inspection data associated with the product (110) in an extension buffer (156) of the memory module, based on the comparison of the determined label and the inspection data, for retraining the first classifier model,
**characterized in**
iv. retrain the first classifier model (123) using one or samples present in the extension buffer (156) for adding one or more new labels, upon detecting a predefined number of samples present in the extension buffer (156),
wherein each sample from the one or more samples comprising production information and corresponding inspection data associated with a corresponding product, the corresponding inspection data including a new label indicative of a condition of the corresponding product (110) determined during the inspection (117, 137) of the product (110).

6. A non-transitory storage medium for virtually inspecting a quality of a product (110) in a production environment (100) using one or more classifier models (123, 133), the non-transitory storage medium comprising a plurality of instructions, which when executed on one or more processors, cause the one or more processors to:
a. determine a label for the product using a first classifier model (123) based on the received information associated with the product (110);
b. compare the determined label against inspection data, wherein the inspection data is associated with an inspection (117, 137) of the product (110); and
c. store the production information and the inspection data associated with the product (110) in an extension buffer (156), based on the comparison of the determined label and the inspection data, for retraining the first classifier model,
**characterized in**
d.retrain the first classifier model (123) using one or samples present in the extension buffer (156) for adding one or more new labels, upon detecting a predefined number of samples present in the extension buffer (156),
wherein each sample from the one or more samples comprising production information and corresponding inspection data associated with a corresponding product, the corresponding inspection data including a new label indicative of a condition of the corresponding product (110) determined during the inspection (117, 137) of the product (110).

## Patentansprüche

1. Verfahren (200) zum virtuellen Inspizieren einer Qualität eines Produkts (110) in einer Produktionsumgebung (100) mithilfe eines oder mehrerer Klassifikatormodelle (123, 133), wobei das Verfahren (200) Folgendes umfasst:
a. Empfangen (210) von mit dem Produkt (110) verknüpften Produktionsinformationen, wobei die Informationen einen an dem Produkt (110) durchgeführten Arbeitsgang in Bezug auf einen ersten Prozess (115) in der Produktionsumgebung (100) angeben,
b. Bestimmen (220) einer Bezeichnung für das Produkt mithilfe eines ersten Klassifikatormodells (123) auf der Grundlage der mit dem Produkt (110) verknüpften empfangenen Informationen,
c. Vergleichen (230) der bestimmten Bezeichnung mit Inspektionsdaten, wobei die Inspektionsdaten mit einer Inspektion (117, 137) des Produkts (110) verknüpft sind, und
d. Speichern (240) der mit dem Produkt (110) verknüpften Produktionsinformationen und Inspektionsdaten in einem Erweiterungspuffer (156) auf der Grundlage des Vergleichs der bestimmten Bezeichnung und der Inspektionsdaten zwecks Umtrainierens des Klassifikatormodells,
**gekennzeichnet durch**
e. Umtrainieren des ersten Klassifikatormodells (123) mithilfe einer oder mehrerer in dem Erweiterungspuffer (156) vorhandener Proben zwecks Hinzufügens einer oder mehrerer neuer Bezeichnungen nach Erkennen einer vorgegebenen Anzahl von in dem Erweiterungspuffer (156) vorhandenen Proben,
wobei jede der einen oder der mehreren Proben Produktionsinformationen und mit einem entsprechenden Produkt verknüpfte entsprechende Inspektionsdaten umfasst, wobei die entsprechenden Inspektionsdaten eine neue Bezeichnung enthalten, die einen Zustand des entsprechenden Produkts (110) angibt, der bei der Inspektion (117, 137) des Produkts (110) bestimmt wird.

2. Verfahren nach Anspruch 1, wobei das Verfahren ferner das Bestimmen einer Anzahl von Proben in dem Erweiterungspuffer (156) umfasst.

3. Verfahren nach Anspruch 1, wobei die Produktionsumgebung einen oder mehrere Prozesse (115, 125, 135) umfasst, wobei jeder des einen oder der mehreren Prozesse (115, 125, 135) einen oder mehrere durchzuführende Arbeitsgänge enthält.

4. Verfahren nach Anspruch 1, wobei Produktionsinformationen nach dem Durchführen des Arbeitsgangs mit dem Produkt (110) verknüpfte visuelle Daten und/oder mit dem Produkt (110) verknüpfte Prozessdaten des ersten Prozesses (115) enthalten.

5. Vorrichtung für die virtuelle Inspektion zum virtuellen Inspizieren einer Qualität eines Produkts (110) in einer Produktionsumgebung (100) mithilfe eines oder mehrerer Klassifikatormodelle (123, 133), wobei die Vorrichtung für die virtuelle Inspektion Folgendes umfasst:
a. eine Netzwerkschnittstelle zum Empfangen von mit dem Produkt (110) verknüpften Produktionsinformationen, wobei die Produktionsinformationen einen an dem Produkt (110) durchgeführten Arbeitsgang in Bezug auf einen ersten Prozess (115) in der Produktionsumgebung (100) angeben, und
b. einen oder mehrere Prozessoren, die mit einem Speichermodul verbunden sind, wobei der eine oder die mehreren Prozessoren so konfiguriert sind, dass sie:
i. mithilfe eines ersten Klassifikatormodells (123) auf der Grundlage der mit dem Produkt (110) verknüpften empfangenen Informationen eine Bezeichnung für das Produkt bestimmen,
ii. die bestimmte Bezeichnung mit Inspektionsdaten vergleichen, wobei die Inspektionsdaten mit einer Inspektion (117, 137) des Produkts (110) verknüpft sind, und
iii. die mit dem Produkt (110) verknüpften Produktionsinformationen und Inspektionsdaten auf der Grundlage des Vergleichs der bestimmten Bezeichnung und der Inspektionsdaten zwecks Umtrainierens des ersten Klassifikatormodells in einem Erweiterungspuffer (156) des Speichermoduls speichern,
**gekennzeichnet durch**
iv. Umtrainieren des ersten Klassifikatormodells (123) mithilfe einer oder mehrerer in dem Erweiterungspuffer (156) vorhandener Proben zwecks Hinzufügens einer oder mehrerer neuer Bezeichnungen nach Erkennen einer vorgegebenen Anzahl von in dem Erweiterungspuffer (156) vorhandenen Proben,
wobei jede der einen oder der mehreren Proben Produktionsinformationen und mit einem entsprechenden Produkt verknüpfte entsprechende Inspektionsdaten umfasst, wobei die entsprechenden Inspektionsdaten eine neue Bezeichnung enthalten, die einen Zustand des entsprechenden Produkts (110) angibt, der bei der Inspektion (117, 137) des Produkts (110) bestimmt wird.

6. Nichtflüchtiges Speichermedium zum virtuellen Inspizieren einer Qualität eines Produkts (110) in einer Produktionsumgebung (100) mithilfe eines oder mehrerer Klassifikatormodelle (123, 133), wobei das nichtflüchtige Speichermedium mehrere Anweisungen umfasst, die, wenn sie von einem oder mehreren Prozessoren ausgeführt werden, den einen oder die mehreren Prozessoren dazu veranlassen:
a. mithilfe eines ersten Klassifikatormodells (123) auf der Grundlage der mit dem Produkt (110) verknüpften empfangenen Informationen eine Bezeichnung für das Produkt zu bestimmen,
b. die bestimmte Bezeichnung mit Inspektionsdaten zu vergleichen, wobei die Inspektionsdaten mit einer Inspektion (117, 137) des Produkts (110) verknüpft sind, und
c. die mit dem Produkt (110) verknüpften Produktionsinformationen und Inspektionsdaten auf der Grundlage des Vergleichs der bestimmten Bezeichnung und der Inspektionsdaten zwecks Umtrainierens des ersten Klassifikatormodells in einem Erweiterungspuffer (156) zu speichern,
**gekennzeichnet durch**
d. Umtrainieren des ersten Klassifikatormodells (123) mithilfe einer oder mehrerer in dem Erweiterungspuffer (156) vorhandener Proben zwecks Hinzufügens einer oder mehrerer neuer Bezeichnungen nach Erkennen einer vorgegebenen Anzahl von in dem Erweiterungspuffer (156) vorhandenen Proben,
wobei jede der einen oder der mehreren Proben Produktionsinformationen und mit einem entsprechenden Produkt verknüpfte entsprechende Inspektionsdaten umfasst, wobei die entsprechenden Inspektionsdaten eine neue Bezeichnung enthalten, die einen Zustand des entsprechenden Produkts (110) angibt, der bei der Inspektion (117, 137) des Produkts (110) bestimmt wird.

## Revendications

1. Procédé (200) d'inspection virtuelle d'une qualité d'un produit (110) dans un environnement de production (100) utilisant un ou plusieurs modèles de classification (123, 133), le procédé (200) comprenant :
a. la réception (210) d'informations de production associées au produit (110), les informations témoignant d'une opération réalisée sur le produit (110), en rapport avec un premier processus (115) de l'environnement de production (100) ;
b. la détermination (220) d'une étiquette pour le produit à l'aide d'un premier modèle de classification (123) sur la base des informations associées au produit (110) reçues ;
c. la comparaison (230) de l'étiquette déterminée avec des données d'inspection, les données d'inspection étant associées à une inspection (117, 137) du produit (110) ; et
d. le stockage (240) des informations de production et des données d'inspection associées au produit (110) dans un tampon d'extension (156), sur la base de la comparaison de l'étiquette déterminée et des données d'inspection, pour recycler le premier modèle de classification,
**caractérisé par**,
e. le recyclage du premier modèle de classification (123) à l'aide d'un ou de plusieurs échantillons présents dans le tampon d'extension (156) pour ajouter une ou plusieurs nouvelles étiquettes, lors de la détection d'un nombre prédéfini d'échantillons présents dans le tampon d'extension (156),
chaque échantillon parmi les un ou plusieurs échantillons comprenant des informations de production et des données d'inspection correspondantes associées à un produit correspondant, les données d'inspection correspondantes incluant une nouvelle étiquette témoignant d'un état du produit (110) correspondant déterminé durant l'inspection (117, 137) du produit (110).

2. Procédé selon la revendication 1, le procédé comprenant en outre la détermination d'un nombre d'échantillons dans le tampon d'extension (156).

3. Procédé selon la revendication 1, dans lequel l'environnement de production inclut un ou plusieurs processus (115, 125, 135), dans lequel chaque processus parmi les un ou plusieurs processus (115, 125, 135) inclut une ou plusieurs opérations destinées à être réalisées.

4. Procédé selon la revendication 1, dans lequel des informations de production incluent au moins un type de données parmi des données visuelles associées au produit (110) subséquentes à la réalisation de l'opération et des données de processus du premier processus (115) associées au produit (110).

5. Dispositif d'inspection virtuelle pour inspecter virtuellement une qualité d'un produit (110) dans un environnement de production (100) à l'aide d'un ou de plusieurs modèles de classification (123, 133), le dispositif d'inspection virtuelle comprenant :
a. une interface réseau pour recevoir des informations de production associées au produit (110), les informations de production témoignant d'une opération réalisée sur le produit (110), en rapport avec un premier processus (115) de l'environnement de production (100) ; et
b. un ou plusieurs processeurs connectés à un module de mémoire, les un ou plusieurs processeurs étant configurés pour :
i. déterminer une étiquette pour le produit à l'aide d'un premier modèle de classification (123) sur la base des informations associées au produit (110) reçues ;
ii. comparer l'étiquette déterminée avec des données d'inspection, les données d'inspection étant associées à une inspection (117, 137) du produit (110) ; et
iii. stocker les informations de production et les données d'inspection associées au produit (110) dans un tampon d'extension (156) du module de mémoire, sur la base de la comparaison de l'étiquette déterminée et des données d'inspection, pour recycler le premier modèle de classification,
**caractérisé par**
iv. le recyclage du premier modèle de classification (123) à l'aide d'un ou de plusieurs échantillons présents dans le tampon d'extension (156) pour ajouter une ou plusieurs nouvelles étiquettes, lors de la détection d'un nombre prédéfini d'échantillons présents dans le tampon d'extension (156),
chaque échantillon parmi les un ou plusieurs échantillons comprenant des informations de production et des données d'inspection correspondantes associées à un produit correspondant, les données d'inspection correspondantes incluant une nouvelle étiquette témoignant d'un état du produit (110) correspondant déterminé durant l'inspection (117, 137) du produit (110).

6. Support de stockage non transitoire pour inspecter virtuellement une qualité d'un produit (110) dans un environnement de production (100) à l'aide d'un ou de plusieurs modèles de classification (123, 133), le support de stockage non transitoire comprenant une pluralité d'instructions, lesquelles, lorsqu'elles sont exécutées sur un ou plusieurs processeurs, amènent les un ou plusieurs processeurs à :
a. déterminer une étiquette pour le produit à l'aide d'un premier modèle de classification (123) sur la base des informations associées au produit (110) reçues ;
b. comparer l'étiquette déterminée avec des données d'inspection, les données d'inspection étant associées à une inspection (117, 137) du produit (110) ; et
c. stocker les informations de production et les données d'inspection associées au produit (110) dans un tampon d'extension (156), sur la base de la comparaison de l'étiquette déterminée et des données d'inspection, pour recycler le premier modèle de classification,
**caractérisé par**
d. le recyclage du premier modèle de classification (123) à l'aide d'un ou de plusieurs échantillons présents dans le tampon d'extension (156) pour ajouter une ou plusieurs nouvelles étiquettes, lors de la détection d'un nombre prédéfini d'échantillons présents dans le tampon d'extension (156),
chaque échantillon parmi les un ou plusieurs échantillons comprenant des informations de production et des données d'inspection correspondantes associées à un produit correspondant, les données d'inspection correspondantes incluant une nouvelle étiquette témoignant d'un état du produit (110) correspondant déterminé durant l'inspection (117, 137) du produit (110).
